# EUROPÄISCHE PATENTSCHRIFT

(11) **EP 2 419 187 B1**
(45) Veröffentlichungstag und Bekanntmachung des Hinweises auf die Patenterteilung: **02.12.2015**
(21) Anmeldenummer: 10708692.8
(22) Anmeldetag: 20.01.2010
(51) Int. Cl.: B01D 9/00

(54) **VERFAHREN ZUR KONTINUIERLICHEN BEHANDLUNG EINER SALZ ENTHALTENDEN LÖSUNG**
PROCESS FOR CONTINUOUSLY TREATING A SOLUTION CONTAINING A SALT
PROCEDE POUR TRAITER EN CONTINU UNE SOLUTION CONTENANT UN SEL

(30) Priorität: 15.04.2009 DE 102009017097
(43) Veröffentlichungstag der Anmeldung: 22.02.2012
(73) Patentinhaber: Air Liquide Global E&C Solutions Germany GmbH, 60439 Frankfurt am Main (DE)
(72) Erfinder: GOLBACH, Marco, 60439 Frankfurt am Main (DE)
(86) Internationale Anmeldenummer: PCT/DE2010/000051
(87) Internationale Veröffentlichungsnummer: WO 2010/118717

(56) Entgegenhaltungen:
- DE-A1- 3 929 828
- DE-T2- 69 300 767
- FR-A1- 2 918 575
- JP-A- 2005 194 153
- US-A- 2 330 221

## Beschreibung

Die Erfindung betrifft ein Verfahren zur kontinuierlichen Behandlung einer Salz enthaltenden Lösung.

Kristallisationsverfahren zur kontinuierlichen Herstellung von Kristallen aus einer Lösung, sind bekannt. Zum Beispiel sind in der Zeitschrift: Chemie Technik, 29, 2000, Nr.8, S. 42-44 (J.Widua u.a.) die gängigen Arten, wie Zwangsumlauf-, Wirbel- und Oslo-Kristallisation, beschrieben. Diese Verfahren beschränken sich in den meisten Anwendungsfällen darauf, eine flüssige Lösung durch Verdampfen aufzukonzentrieren, sodass es zur Auskristallisation des gelösten Stoffes kommt. Diese Verfahren sind aber auch dazu geeignet, falls die Lösung aus mehreren flüssigen Stoffkomponenten besteht, im gleichen Arbeitsgang mit der Kristallisation die leichter siedende Komponente abzudestillieren.

Ein derartiges Verfahren wird beispielsweise in der japanischen Anmeldeschrift JP 2005-194153 A beschrieben. Bei diesem Verfahren wird die Salzlösung innerhalb eines Autoklaven durch ein in einem Zentralrohr installiertem Rührwerk umgepumpt. Dämpfe werden am Kopf des Autoklaven abgezogen. Die entstandenen Kristalle sinken in den Boden des Autoklaven und von da in ein an den Boden angeflanschtes Klassierrohr ab, aus dem sie aus dem Prozess ausgetragen werden. Am untersten Punkt des Klassierrohrs wird kristallarme Lösung eingespeist, um durch eine aufwärts gerichtete Strömung das Absinken kleiner Kristalle in das Klassierrohr zu verhindern. Im Randbereich des Autoklaven ist durch Einbauten eine senkrechte Ruhezone installiert, an deren oberen Ende sich Lösung absetzt, die frei von größeren Kristallen, aber beladen mit Kristallkeimen und Kleinkristallen ist. Um den Verlauf der Kristallisation im Autoklaven und die Anzahl der Kristallkeime zu beeinflussen, wird Lösung aus dem oberen Bereich der Ruhezone aus dem Autoklaven abgezogen, durch Erwärmen oder Verdünnen zum Auflösen der Kristallkeime behandelt und wieder in den Autoklaven eingeführt.

Ein weiteres Beispiel für einen Kristallisator wird in der französischen Anmeldeschrift FR 2 918 575 beschrieben. Hier wird die Salzlösung durch einen außenliegenden Zwangsumlauf im Kristallisationsbehälter in Bewegung gehalten. Für den Zwangsumlauf wird die Lösung aus dem oberen Bereich der auch in diesem Beispiel installierten Ruhezone abgezogen, durch einen Wärmetauscher geleitet, in dem sie erhitzt wird und in dem Kristallkeime aufgelöst werden und anschließend wieder in das Kristallisatorgefäß zurück geführt. Als Besonderheit wird in dieser Schrift vorgeschlagen, im Zwangsumlauf, in Flussrichtung vor dem Wärmetauscher, einen Abscheider zu installieren, der einen mit dem größten Teil der im Zwangsumlauf befindlichen Kristalle beladenen Strom abzweigt, diesen durch einen separaten Wärmetauscher zum Auflösen der Kristalle leitet und hinter dem Wärmetauscher der Zwangsumlaufleitung wieder in die Hauptleitung des Zwangsumlaufs einspeist.

Durch diese Maßnahme können die beiden Aufgaben des Zwangsumlaufs, das Einbringen von Wärme zur Verdampfung der Flüssigkeit der Salzlösung und das Einbringen von Wärme zur Auflösung von Kristallkeimen, bis zu einem gewissen Grad voneinander getrennt durchgeführt werden.

Allerdings bieten diese Verfahren keine Möglichkeit die schwerer siedende Flüssigkeitskomponente getrennt von den Kristallen aus dem Verdampfer abzuziehen, sodass sie für eine weitere Behandlung bereitgestellt werden kann. Auch ist es mit den bisherigen Verfahren nicht möglich, die Verweilzeiten von Flüssigkeit und Kristallen unabhängig voneinander einzustellen.

Grundsätzlich kann die Kristallgröße bei der Kristallisation aus einer Lösung durch die Keimbildungsrate und durch die Verweilzeit der Kristalle in der übersättigten Lösung beeinflusst werden. Die Höhe der Keimbildungsrate wird im Wesentlichen vom Grad der Übersättigung der Lösung, der Größe der zum Stoffübergang aus der Lösung zum Kristall zur Verfügung stehenden Grenzfläche und von der Höhe des mechanischen Energieeintrags bestimmt. Außerdem ist es bekannt, zusätzliche Keimkristalle, sogenannte Impfkristalle, von außen in die Lösung einzubringen oder, wenn die Zahl der Keime gesenkt werden soll, gezielt Kristallkeime und Kleinkristalle aus dem Verdampfer abzuziehen, diese durch Erwärmen oder Verdünnen zu zerstören und dann die Lösung in den Verdampfer zurückzuführen, wie es in der oben beschriebenen japanischen bzw. französischen Schrift vorgeschlagen wird.

Nachteilig an dieser Methode ist, dass hierfür im Verdampfer durch Inneneinbauten Absetzzonen zum Sammeln der Kristallkeime geschaffen werden müssen; diese Einbauten sind kostenaufwendig und erschweren die Reinigung des Kristallisators.

Bei Verfahren zur Kristallisation aus einer Lösung werden die Größe des Kristallisationsraumes, die Verfahrensparameter wie Vakuum und Temperaturen und die Verdampfungs- und Kristallisationsleistung so auf einander abgestimmt, dass die Kristallisation im metastabilen Übersättigungsbereich abläuft. Der metastabile Bereich ist gekennzeichnet durch eine stabile und niedrige Keimbildungsrate und durch Größenwachstum der Kristalle. Trotzdem kann es bei diesen Verfahren zu Schwankungen der Kristallgröße kommen. Ursache hierfür ist, gemäß der o.g. Schrift von J. Widua, dass mit dem Wachstum der Kristalle in der Lösung die zum Stoffaustausch zwischen Lösung und Kristallen zur Verfügung stehende Grenzfläche abnimmt. Dadurch steigt die Übersättigung der Lösung bis in den Bereich primärer Keimbildung, in dem es zu plötzlicher, schauerartiger Bildung von Kristallkeimen kommt.

Aufgabe der Erfindung ist es, ein Kristallisationsverfahren zur Verfügung zu stellen, bei dem die Kristallgröße eingestellt und geregelt wird, das ohne Klassierzonen im Verdampferbehälter, ohne Systeme zum Zerstören von Kristallkeimen und ohne eine Impfung mit Kristallkeimen auskommt, und das dazu in der Lage ist, die durch Verdampfung erhaltene schwerer siedende Flüssigphase getrennt von den Kristallen aus dem Verdampfer abzuziehen und für eine weitere Behandlung bereitzustellen.

Die Aufgabe wird durch das erfindungsgemäße Verfahren zur kontinuierlichen Behandlung einer Salz enthaltenden Lösung gemäß Anspruch 1 gelöst, bei dem in einem Zwangsumlaufverdampfer ablaufend, die leichter siedenden Flüssigkeitsanteile abdampft werden und das Salz auskristallisiert wird, wobei die Größe der Kristalle geregelt wird und die Kristalle sich im Boden des Verdampfers sammeln und in Form einer Salztrübe abgezogen werden, wobei der zur weiteren Behandlung außerhalb des Zwangsumlaufverdampfers vorgesehene Anteil der Lösung über einen in der Umlaufleitung des Zwangsumlaufverdampfers stromwärts zwischen Verdampferbehälter und der Pumpe installierten Dekanter, unter Zurückhaltung der Kristalle, aus der im Umlauf geförderten Suspension abgetrennt und der weiteren Behandlung zugeführt wird.

Das erfindungsgemäße Verfahren ist damit in der Lage, zwei Verfahrensprodukte zu liefern, zum einen, die Kristalle, in Form einer Salztrübe, und zum anderen, die, weitgehend von leichter siedenden Flüssigkeitskomponenten befreite, Lösung.

Durch das getrennte Austragen der Kristalle und der Lösung, ist die Möglichkeit geschaffen, die Verweilzeit und damit die Größe der Kristalle unabhängig von der Verweilzeit der Lösung einzustellen.

Bei einer vorteilhaften Ausgestaltung der Erfindung gemäß Anspruch 2 wird die Dichte der Suspension in der Umlaufleitung, stromwärts zwischen Verdampferbehälter und Abscheider, gemessen und geregelt.

Die Regelung erfolgt durch Einstellung der am Boden des Verdampferbehälters pro Zeiteinheit abgezogenen Menge an Salztrübe.

Im kontinuierlichen Anlagenbetrieb läuft die Kristallisation im metastabilen Übersättigungsbereich ab, sodass die auskristallisierte Menge und die Keimbildungsrate konstant gehalten wird. Unter dieser Bedingung ist die Dichte der Suspension proportional der mittleren Kristallgröße. Durch die Regelung der Suspensionsdichte in der Umlaufleitung kann also die gewünschte Kristallgröße eingestellt werden und verhindert werden, dass eine kritischen Kristallgröße überschritten wird, die zu primärer Kristallkeimbildung in der Lösung führen könnte.

In einer weiteren vorteilhaften Ausgestaltung der Erfindung gemäß Anspruch 3 wird die Salztrübe durch ein am Boden des Zwangsumlaufverdampfers angebrachtes Austragsrohr ausgetragen, wobei durch Einspeisen von kristallfreier Lösung in das Austragsrohr, die Dichte der ausgetragenen Salztrübe eingestellt wird. Die Dichte der Salztrübe wird dabei den Erfordernisse ihres Transports und des nachfolgenden, weiterbehandelnden Verfahrens angepasst.

In einer weiteren vorteilhaften Ausgestaltung der Erfindung gemäß Anspruch 4 wird der Volumenstrom der im unteren Teil des Austragsrohrs eingespeisten kristallfreien Lösung um so viel größer als der Volumenstrom der abgezogenen Salztrübe eingestellt, dass durch die daraus resultierende, im Austragsrohr aufwärtsgerichtete Strömung, das Absinken von Kristallen unterhalb einer gewählten Größe im Austragsrohr verhindert wird.

In einer weiteren vorteilhaften Ausgestaltung der Erfindung gemäß Anspruch 5 wird zur Förderung des Flüssigkeitsumlaufs eine Rohrbogenpropellerpumpe eingesetzt. Diese Maßnahme dient dazu, den Eintrag an mechanischer Energie, und damit die Keimbildungsrate, niedrig zu halten, sodass das Kristallwachstum gefördert wird.

In einer weiteren vorteilhaften Ausgestaltung der Erfindung gemäß Anspruch 6 wird die vom Erhitzer (4) kommende Umlaufleitung so geführt, dass sie radial und unterhalb des Flüssigkeitsspiegels, bevorzugt 300 bis 600 mm unterhalb, gemessen von der Rohrleitungsmitte, in den, im wesentlichen, zylindrischen Verdampferbehälter einmündet. Durch diese Maßnahme wird eine turbulente Flüssigkeitsbewegung im Verdampferbehälter erzeugt, die für eine gute Durchmischung sorgt und örtliche, zu hohe Übersättigungen der Lösung vermeiden hilft.

Besonders geeignet ist das erfindungsgemäße Verfahren zur Abtrennung von Kaliumsulfat-Kristallen aus Rohglycerinlösungen, die bei der Umesterung von Fetten oder fetten Ölen erhalten werden.

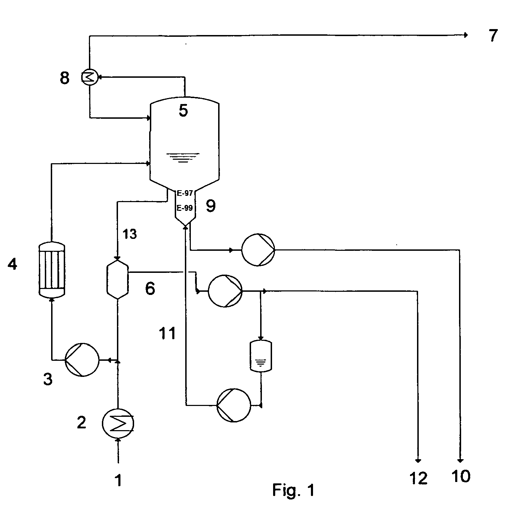

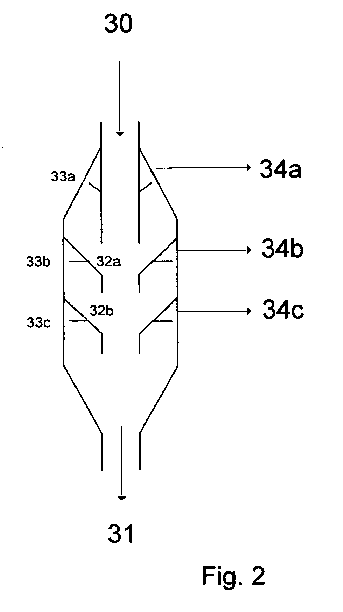

Die Erfindung wird nachstehend durch ein Ausführungsbeispiel an Hand der Zeichnung mit Fig. 1 und 2, sowie der Stoffstromtabelle näher erläutert. Fig. 1 der Zeichnung zeigt eine beispielhafte Ausführung des erfindungsgemäßen Verfahrens.

Aus einem Tanklager kommendes Rohglycerin (1) wird mit einem Wärmetauscher (2) auf 95°C aufgeheizt und in die Umlaufleitung des Verdampfers eingespeist. Die Glycerinlösung wird durch Pumpe (3) durch den Umlauferhitzer (4), in dem es auf 120°C erhitzt wird, den Verdampferbehälter (5) und den Dekanter (6) im Umlauf gefördert.

Durch die Absaugung der Dämpfe über Leitung (7) wird im Dampfraum des Verdampferbehälters (5) ein Druck von 55 mbar eingestellt. Der Wassergehalt des Rohglycerins wird im Verdampfer von 10% auf 3% gesenkt. In einem Kondensator (8) wird mitverdampftes Glycerin auskondensiert.

Durch das Abdampfen des Wassers kristallisiert Kaliumsulfat aus. Die Kristalle haben eine größere Dichte als die Lösung und sinken daher in den Bodenbereich des Verdampferbehälters (5) und weiter in das Austragsrrohr (9) ab. In diesem Beispiel werden Kaliumsulfatkristalle mit einem mittleren Sinkgeschwindigkeitsäquivalentdurchmesser von 0,1 mm erzeugt. Der Sinkgeschwindigkeitsäquivalentdurchmesser wird unregelmäßig geformten Kristallen, zu denen Kaliumsulfatkristalle gehören, zugeordnet, die die gleiche Sinkgeschwindigkeit haben wie kugelförmige Kristalle dieses Durchmessers mit diesem Zahlenwert. Diese Methode zur Beschreibung von Kristallgrößen ist z.B. beschrieben in Leschonski et al.: Teilchengrößenanalyse, Artikelserie in Chemie-Ingenieur-Technik 46 (1974) und 47 (1975).

Der Verdampferbehälter (5) hat einen Durchmesser von 2,8 m und eine Gesamthöhe (ohne Austragsrohrrohr) von 9 m. Das Austragsrohr hat eine Länge von 4 m und einen Durchmesser von 0,3 m. Das Flüssigkeitsvolumen im Verdampferbehälter beträgt 23,6 m³ (inklusive Austragsrohr). Die Umlaufleitung mündet 500 mm unterhalb des Flüssigkeitsspiegels, gemessen von der Rohrleitungsmitte, in den Verdampferbehälter.

Die ausgefallenen Kristalle werden in Form einer Trübe (10) aus dem Verdampfer ausgetragen. Die Dichte der Trübe wird durch Einspeisung eines von der ausgetragenen Lösung abgetrennten Teilstroms (11) in das Austragsrohr eingestellt.

Die Dichte der Suspension wird in der Umlaufleitung (13) gemessen.

Die im Verdampfer aufkonzentrierte Glycerinlösung wird über den Dekanter (6), unter Zurückhaltung der Kristalle, aus dem Verdampferkreislauf abgezogen und in die nächste, nicht dargestellte, Verfahrensstufe eingespeist.

Die Funktionsweise des Dekanters (6 in Fig.1) wird im Folgenden an Hand von Fig. 2 erläutert.

Der Dekanter ist in senkrechter Stellung in die Umlaufleitung eingebaut und wird von der Suspension von oben (30) nach unten (31) durchströmt. Er besteht aus einem zylindrischen Behälter mit einem konischen Deckel und einem konischen Boden, bei dem die Zulaufleitung bis in den zylindrischen Teil des Behälters eintaucht, bei dem im zylindrischen Teil untereinander angeordnet zwei Trichter (32 a, b) installiert sind, deren Auslauf den gleichen Durchmesser wie die Zulaufleitung hat und die mit dem oberen Rand umlaufend mit der Innenseite des Behälters verbunden sind, bei dem auf der Außenseite der in den Behälter eintauchenden Zulaufleitung und auf der Außenseite der Trichter jeweils im Bereich von 30 bis 70% der Seitenhöhe ein umlaufendes Trennblech (33a, b, c) befestigt ist, dessen freie Kante einen umlaufenden Spalt mit der Innenseite des Behälters bildet, wobei sich im Bereich oberhalb des Trennblechs jeweils ein Rohrleitungsanschluss (34 a, b, c) zum Abziehen der an dieser Stelle weitgehend von Kristallen befreiten Lösung befindet. Die drei Abzugleitungen des Dekanters, 34 a, b und c werden zu einer, in Fig.2 nicht dargestellten, einzigen Abzugsleitung zusammengefasst.

In diesem Beispiel hat der Dekanter eine Gesamthöhe von 3,4 m und einen Durchmesser von 1,2 m. Der umlaufende Spalt zwischen der Innenseite der Behälterwand und den Trennblechen 33 a, b und c ist zwischen 1,5 und 4,5 mm, vorzugsweise 3 mm weit.

### Stoffstromtabelle

| Stoffstrom | | 1 | 7 | 12 | 10 | 11 | 13 |
|---|---|---|---|---|---|---|---|
| | | Rohglycerin | Verdampferbrüden | Glyzerinlösung | Trübe | Verdünnungsstrom | Umlaufstrom |
| Glyzerin | Gew-% | 83,5 | 0,5 | 92,7 | 67 | 94,5 | 81 |
| Wasser | Gew-% | 10 | 94,5 | 3 | 0,7 | 1 | 0,9 |
| K₂SO₄ | Gew-% | 3 | 0 | 1 | 30 | 1 | 15 |
| MONG | Gew-% | 3 | 0 | 3,3 | 2,4 | 3,4 | 3 |
| Methanol | Gew-% | 0,5 | 5 | 0 | 0 | 0 | 0 |
| Dichte | kg/m³ | | | | | | 1.191 |
| Temperatur | °C | 45 | 80 | 120 | 120 | 120 | 120 |
| Druck | bar | 5 | 0,050 | | 3 | | 2 |
| Durchfluss | kg/h | 23.807 | 2.300 | 20.197 | 1.721 | 600 | 948.193 |

## Patentansprüche

1. Verfahren zur kontinuierlichen Behandlung einer Salz enthaltenden Lösung, ablaufend in einem Zwangsumlaufverdampfer, bei dem die leichter siedenden Flüssigkeitsanteile abgedampft werden und das Salz auskristallisiert wird, wobei die Größe der Kristalle geregelt wird und die Kristalle sich im Boden des Verdampfers sammeln und in Form einer Salztrübe abgezogen werden, wobei stromwärts zwischen Verdampferbehälter (5) und der Pumpe (3) ein Dekanter (6) installiert ist, **dadurch gekennzeichnet, dass** ein zur weiteren Behandlung außerhalb des Zwangsumlaufverdampfers vorgesehene Anteil (12) der Lösung über den Dekanter (6), unter Zurückhaltung der Kristalle, aus der im Umlauf geförderten Suspension abgetrennt und der weiteren Behandlung zugeführt wird, wobei der Dekanter in senkrechter Stellung in der Umlaufleitung eingebaut ist und von der Suspension von oben (30) nach unten (31) durchströmt wird, und wobei der Dekanter aus einem zylindrischen Behälter mit einem konischen Deckel und einem konischen Boden besteht, bei dem die Zulaufleitung bis in den zylindrischen Teil des Behälters eintaucht, bei dem im zylindrischen Teil untereinander angeordnet zwei Trichter (32 a, b) installiert sind, deren Auslauf den gleichen Durchmesser wie die Zulaufleitung hat und die mit dem oberen Rand umlaufend mit der Innenseite des Behälters verbunden sind, und bei dem auf der Außenseite der in den Behälter eintauchenden Zulaufleitung und auf der Außenseite der Trichter jeweils im Bereich von 30 bis 70% der Seitenhöhe ein umlaufendes Trennblech (33a, b, c) befestigt ist, dessen freie Kante einen umlaufenden Spalt mit der Innenseite des Behälters bildet, wobei sich im Bereich oberhalb des Trennblechs jeweils ein Rohrleitungsanschluss (34 a, b, c) zum Abziehen der an dieser Stelle weitgehend von Kristallen befreiten Lösung befindet..

2. Verfahren nach Anspruch 1, **dadurch gekennzeichnet, dass** die Dichte der im Zwangsumlaufverdampfer umlaufenden Suspension in der Umlaufleitung zwischen Verdampferbehälter (5) und Dekanter (6) gemessen und durch Einstellung der am Boden des Verdampferbehälters pro Zeiteinheit abgezogenen Menge an Salztrübe (10) geregelt wird.

3. Verfahren nach einem der vorhergehenden Ansprüche, **dadurch gekennzeichnet, dass** die Salztrübe (10) durch ein am Boden des Zwangsumlaufverdampfers angebrachtes Austragsrohr (9) ausgetragen wird, wobei durch Einspeisen von kristallfreier Lösung in das Austragsrohr, die Dichte der ausgetragenen Salztrübe (10) eingestellt wird.

4. Verfahren nach Anspruch 3, **dadurch gekennzeichnet, dass** die kristallfreie Lösung im unteren Teil des Austragsrohrs (9) eingespeist wird und deren Volumenstrom um so viel größer als der Volumenstrom der abgezogenen Salztrübe (10) eingestellt wird, dass durch die daraus resultierende, aufwärtsgerichtete Strömung das Absinken von Kristallen unterhalb einer gewählten Größe im Austragsrohr verhindert wird.

5. Verfahren nach einem der vorhergehenden Ansprüche, **dadurch gekennzeichnet, dass** zur Förderung des Flüssigkeitsumlaufs eine Rohrbogenpropellerpumpe (3) eingesetzt wird.

6. Verfahren nach einem der vorhergehenden Ansprüche, **dadurch gekennzeichnet, dass** die vom Erhitzer (4) kommende Umlaufleitung radial und unterhalb des Flüssigkeitsspiegels in den, im wesentlichen, zylindrischen Verdampferbehälter (5) einmündet.

7. Verfahren nach einem der vorhergehenden Ansprüchen, **dadurch gekennzeichnet, dass** es zur Abtrennung von Kaliumsulfat-Kristallen aus Rohglycerinlösungen verwendet wird, die bei der Umesterung von Fetten oder fetten Ölen erhalten werden.

## Claims

1. A process for the continuous treatment of a salt-containing solution, proceeding in a forced-circulation evaporator in which the lower boiling liquid fractions are evaporated and the salt is crystallized out, wherein the size of the crystals is controlled and the crystals accumulate at the bottom of the evaporator and are withdrawn in the form of a salt turbidity, wherein in flow direction between evaporator container (5) and pump (3) a decanter (6) is installed, **characterized in that** a fraction (12) of the solution provided for the further treatment outside the forced-circulation evaporator is separated from the suspension delivered in the circulation via the decanter (6), by retaining the crystals, and is supplied to the further treatment, wherein the decanter is installed in the circulation line in vertical position and is traversed by the suspension from top (30) to bottom (31), and wherein the decanter consists of a cylindrical container with a conical lid and a conical bottom, in which the supply line immerses down into the cylindrical part of the container, in which in the cylindrical part two funnels (32a, b) arranged one below the other are installed, whose outlet has the same diameter as the supply line and which with the upper edge are circumferentially connected with the inside of the container, and in which on the outside of the supply line immersing into the container and on the outside of the funnels each in the region of 30 to 70% of the side height a circumferential baffle plate (33a, b, c) is attached, whose free edge forms a circumferential gap with the inside of the container, wherein in the region above the baffle plate a pipe conduit port (34a, b, c) each is located for withdrawing the solution largely liberated from crystals at this point.

2. The process according to claim 1, **characterized in that** the density of the suspension circulating in the forced-circulation evaporator in the circulation line between evaporator container (5) and decanter (6) is measured and controlled by adjusting the amount of salt turbidity (10) withdrawn at the bottom of the evaporator container per unit time.

3. The process according to any of the preceding claims, **characterized in that** the salt turbidity (10) is discharged through a discharge pipe (9) mounted at the bottom of the forced-circulation evaporator, wherein by feeding solution free from crystals into the discharge pipe the density of the salt turbidity (10) discharged is adjusted.

4. The process according to claim 3, **characterized in that** the solution free from crystals is fed into the lower part of the discharge pipe (9) and its volume flow is adjusted so much greater than the volume flow of the withdrawn salt turbidity (10) that by the resulting upwardly directed flow the descent of crystals below a chosen size in the discharge pipe is prevented.

5. The process according to any of the preceding claims, **characterized in that** for promoting the circulation of liquid an elbow propeller pump (3) is used.

6. The process according to any of the preceding claims, **characterized in that** the circulation line coming from the heater (4) opens into the substantially cylindrical evaporator container (5) radially and below the liquid level.

7. The process according to any of the preceding claims, **characterized in that** it is used for the separation of potassium sulfate crystals from raw glycerol solutions which are obtained in the transesterification of fats or fatty oils.

## Revendications

1. Procédé de traitement en continu d'une solution contenant du sel s'écoulant dans un évaporateur à circulation forcée, dans lequel on évapore des parties de liquide à point d'ébullition assez bas et on sépare le sel par cristallisation, dans lequel on règle la dimension des cristaux et on accumule les cristaux au fond de l'évaporateur et on les soutire sous la forme d'une boue de sel, dans lequel il est monté dans le sens du courant un décanteur (6) entre la cuve (5) de l'évaporateur et la pompe (3), **caractérisé en ce qu'**on sépare de la suspension véhiculée en circuit, par le décanteur (6) avec retenue des cristaux, une partie (12) de la solution prévue pour le traitement ultérieur à l'extérieur de l'évaporateur à circulation forcée et on l'envoie au traitement ultérieur, le décanteur étant monté en position verticale dans le conduit de circulation et étant parcouru par la suspension de haut (30) en bas (31) et le décanteur étant constitué d'une cuve cylindrique ayant un couvercle conique et un fond conique, dans lequel le conduit d'arrivée pénètre jusque dans la partie cylindrique de la cuve, dans lequel il est monté dans la partie cylindrique deux entonnoirs (32 a, b) disposés l'un en dessous de l'autre, dont la sortie a le même diamètre que le conduit d'entrée et qui sont reliés, par le bord supérieur en faisant le tour, au côté inférieur de la cuve et dans lequel il est fixé, du côté extérieur du conduit d'entrée pénétrant dans la cuve et du côté extérieur des entonnoirs, respectivement dans la partie de 30 à 70% de la hauteur latérale, une tôle (33a, b, c) de séparation faisant le tour, dont le bord libre forme une fente faisant le tour avec le côté intérieur de la cuve, dans lequel, dans la partie au-dessus de la tôle de séparation, se trouve respectivement un raccord (34 a, b, c) de canalisation, pour soutirer en ce point la solution débarrassée dans une grande mesure de cristaux.

2. Procédé suivant la revendication 1, **caractérisé en ce qu'**on mesure, dans le conduit de circulation entre la cuve (5) de l'évaporateur et le décanteur (6), la masse volumique de la suspension circulant dans l'évaporateur à circulation forcée et on la règle en réglant la quantité de boue (10) de sel soutirée au fond de la cuve de l'évaporateur par unité de temps.

3. Procédé suivant l'une des revendications précédentes, **caractérisé en ce qu'**on soutire la boue (10) de sel par un tuyau (9) de soutirage mis au fond de l'évaporateur à circulation forcée, la masse volumique de la boue (10) de sel soutirée étant réglée par l'injection de solution sans cristal dans le tuyau de soutirage.

4. Procédé suivant la revendication 3, **caractérisé en ce qu'**on injecte la solution sans cristal dans la partie inférieure du tuyau (9) de soutirage et on en règle le courant en volume à une valeur bien plus grande que le courant en volume de la boue (10) de sel soutirée, de manière à ce que le courant qui s'ensuit dirigé vers le haut empêche que des cristaux inférieurs à une dimension sélectionnée descendent dans le tuyau de soutirage.

5. Procédé suivant l'une des revendications précédentes, **caractérisé en ce que**, pour véhiculer la circulation de liquide, on utilise une pompe (3), dont le corps constitue un élément courbe de tuyauterie.

6. Procédé suivant l'une des revendications précédentes, **caractérisé en ce que** le conduit de circulation venant du réchauffeur (4) débouche radialement et en dessous du niveau du liquide dans la cuve (5) de l'évaporateur sensiblement cylindrique.

7. Procédé suivant l'une des revendications précédentes, **caractérisé en ce qu'**on l'utilise pour séparer des cristaux de sulfate de potassium de solutions brutes de glycérine, qui sont obtenues lors de la transesterification de matière grasse ou d'huile grasse.
